(19) Europäisches Patentamt
European Patent Office
Office européen des brevets

(11) EP 2 848 640 A1

(12) **EUROPÄISCHE PATENTANMELDUNG**

(43) Veröffentlichungstag:
**18.03.2015 Patentblatt 2015/12**

(21) Anmeldenummer: **13184290.8**

(22) Anmeldetag: **13.09.2013**

(51) Int Cl.:
***C08G 65/335*** (2006.01) ***C08K 5/00*** (2006.01)
***C07C 43/11*** (2006.01) ***C10M 141/10*** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **LANXESS Deutschland GmbH**
**50569 Köln (DE)**

(72) Erfinder:
- **Dr. Hansel, Jan-Gerd**
  **51469 Bergisch Gladbach (DE)**
- **Dr. Tebbe, Heiko**
  **41539 Dormagen (DE)**

(54) **Phosphorsäureester-Zubereitungen mit verringerter Hygroskopie**

(57) Die vorliegende Erfindung betrifft Phosphorsäureester-Zubereitungen mit verringerter Hygroskopie, deren Verwendung als Flammschutzmittel und Hydraulikflüssigkeiten und Polyurethane, die die erfindungsgemäßen Phosphorsäureester-Zubereitungen enthalten.

EP 2 848 640 A1

**Beschreibung**

Die vorliegende Erfindung betrifft Phosphorsäureester-Zubereitungen mit verringerter Hygroskopie, Verfahren zu deren Herstellung und deren Verwendung als Flammschutzmittel und Hydraulikflüssigkeiten sowie weiterhin Polyurethane, die die erfindungsgemäßen Phosphorsäureester-Zubereitungen enthalten.

Poly(alkylenphosphate) können in verschiedenen technischen Anwendungen eingesetzt werden, z. B. als Schmierstoffe (vgl. US 2,632,767), Hydraulikflüssigkeiten (vgl. US 4,056,480), Weichmacher (vgl. US 2,782,128) und als Flammschutzmittel (vgl. EP 1 746 129 B1, und die nicht vorveröffentlichte Europäische Patentanmeldung Nr. 12177287.5)

Störend in diesen Anwendungen wirkt sich jedoch die ausgeprägte Hygroskopie der Poly-(alkylenphosphate) aus, siehe Beispiel M-V 1. Als Hygroskopie bezeichnet man die Eigenschaft eines Stoffes, Wasser aus dem Wasserdampf der Luft aufzunehmen. Durch diesen Vorgang steigt der Wassergehalt der Poly(alkylenphosphate) unkontrolliert an, was in den genannten Anwendungen zu Schwierigkeiten führen kann. So kann der erhöhte Wassergehalt in Hydraulikölen zur Bildung von Dampfblasen führen, die unerwünschte Kompressibilität zur Folge haben können. Flammschutzmittel mit ungewollten Wassergehalt können Hydrolyse der zu schützenden Matrix (z. B. ein Kunststoff) verursachen. Im Fall der Herstellung von Polyurethanen ist der Wassergehalt der eingesetzten Flammschutzmittel immer unerwünscht, da er zu unkontrollierter Verschäumung führt. Selbst bei wassergetriebenen Polyurethanschaumstoffen sollten alle Rohstoffe einen möglichst niedrigen und konstanten Wassergehalt aufweisen, damit die Schaumstoffeigenschaften durch die exakte Dosierung des Treibmittels Wasser kontrolliert eingestellt werden können. Allgemein kann ein erhöhter Wassergehalt die Korrosion von metallischen Werkstoffen fördern.

Aus diesen Gründen ist die Verwendung von Poly(alkylenphosphaten) an Schutzmaßnahmen gekoppelt, die über die gesamte Produktlogistik hinweg einen Zutritt von feuchter Luft zum Produkt verhindern müssen. Beispielsweise müssen Lagertanks mit Inertgas überlagert werden. Dies bedeutet einen technischen Mehraufwand.

Mischungen aus oligomeren Poly(alkylenphosphaten) und nicht-oligomeren, nicht-halogenierten Organophosphor-Flammschutzmitteln werden in WO 2001/018088 A1 beschrieben. In WO 2001/018088 A1 wird allerdings das Problem der Hygroskopie nicht angesprochen. Besonders bevorzugt werden in WO 2001/018088 A1 Mischungen auf Basis von sogenanntem Poly(ethyl-ethylenoxy)phosphat, $EtO-[P(=O)OEt-CH_2CH_2-]_n-P(=O)(OEt)_2$, wobei der Mittelwert der Anzahl der Repetiereinheiten $\bar{n}$ von 2 bis 20 beträgt. Poly(ethyl-ethylenoxy)phosphat wird beispielsweise von Fa. ICL-IP unter dem Handelsnamen Fyrol® PNX vermarktet. Diese Mischungen auf Basis von Poly(ethyl-ethylenoxy)phosphat werden in WO 2001/018088 A1 als Flammschutzmittel für Polyurethanschaumstoffe beschrieben, zeichnen sich aber durch den erheblichen Nachteil aus, dass sie sich zwar mit Polyether-Polyolen, nicht aber mit Polyester-Polyolen erfolgreich verarbeitet werden können (siehe Beispiele).

Aufgabe der vorliegenden Erfindung war es daher, Produkte auf Basis von Poly(alkylenphosphaten) bereit zu stellen, die sich durch verringerte Hygroskopie auszeichnen und eine gute Verarbeitbarkeit in Polyester-Polyolen besitzen.

Diese Aufgabe wird gelöst durch Mischungen, die neben einer Oligimerenmischung von Poly(alkylenphosphaten) bestimmte Phosphorsäureester enthalten.

Gegenstand der vorliegenden Erfindung sind daher Phosphorsäureester-Zubereitungen, dadurch gekennzeichnet, dass sie

i) eine Oligomerenmischung a), enthaltend mindestens drei Poly(alkylenphosphate) entsprechend der Formel (I)

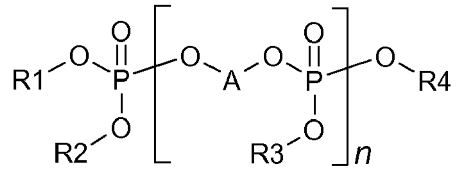

(I),

$R^1$, $R^2$, $R^3$ und $R^4$ unabhängig voneinander jeweils für einen geradkettigen oder verzweigten $C_1$- bis $C_8$-Alkylrest oder für einen geradkettigen oder verzweigten $C_1$- bis $C_4$-Alkoxyethylrest stehen,

A für einen geradkettigen, verzweigten und/oder cyclischen $C_4$- bis $C_{20}$-Alkylenrest steht, oder

A für einen Rest der Formel $-CH_2-CH=CH-CH_2-$, einen Rest der Formel $-CH_2-C{\equiv}C-CH_2-$, einen Rest der Formel $-CHR^5-CHR^6-(O-CHR^7-CHR^8)_a-$, einen Rest der Formel $-CHR^5-CHR^6-S(O)_b-CHR^7-CHR^8-$ oder für einen Rest der Formel $-(CHR^5-CHR^6-O)_c-R^9-(O-CHR^7-CHR^8)_d-$ steht,

worin

a für eine ganze Zahl von 1 bis 5 steht,
b für eine ganze Zahl von 0 bis 2 steht,
c und d unabhängig voneinander für eine ganze Zahl von 1 bis 5 stehen,
$R^5$, $R^6$, $R^7$ und $R^8$ unabhängig voneinander für H oder Methyl stehen,
$R^9$ für einen Rest der Formel $-CH_2-CH=CH-CH_2-$, einen Rest der Formel $-CH_2-C{\equiv}C-CH_2-$, einen 1,2-Phenylenrest, einen 1,3-Phenylenrest, einen 1,4-Phenylenrest, oder für einen Rest der Formel (II)

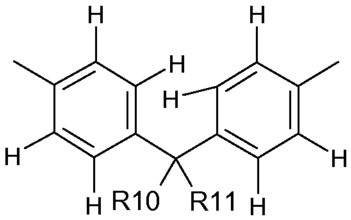

(II),

ein Rest der Formel (III)

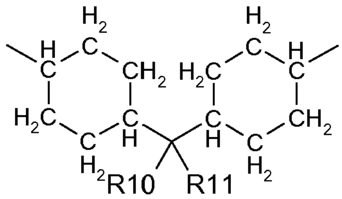

(III),

ein Rest der Formel (IV)

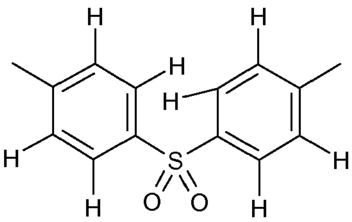

(IV),

oder ein Rest der Formel $-C(=O)-R^{12}-C(=O)-$, steht,
wobei
$R^{10}$ und $R^{11}$ unabhängig voneinander jeweils für H oder $C_1$- bis $C_4$-Alkyl stehen oder $R^{10}$ und $R^{11}$ zusammen für einen gegebenenfalls alkylsubstituierten Ring mit 4 bis 8 C-Atomen stehen,
$R^{12}$ für einen geradkettigen, verzweigten und/oder cyclischen $C_2$- bis $C_8$-Alkylenrest, einen 1,2-Phenylenrest, einen 1,3-Phenylenrest, oder einen 1,4-Phenylenrest stehen, und
*n* für eine ganze Zahl von 0 bis 100 steht,
mit der Maßgabe, dass sich die mindestens drei Poly(alkylenphosphate) der Formel (I) mindestens in der Anzahl *n* der Repetiereinheiten voneinander unterscheiden, und
der Mittelwert der Anzahl der Repetiereinheiten $\bar{n}$ der mindestens drei Poly(alkylenphosphate) der Formel (I) größer als 1,10 und kleiner als 2,00 ist.
und

ii) mindestens einen Phosphorsäureester b), dessen Löslichkeit in Wasser bei 25 °C weniger als 3,0 g/l beträgt, enthält.

Bevorzugt sind Poly(alkylenpolyphosphate) der Formel (I) worin $R^1$, $R^2$, $R^3$ und $R^4$ gleich und bedeuten entweder Ethyl, n-Propyl, iso-Propyl, n-Butyl, iso-Butyl oder n-Butoxyethyl. Bevorzugt ist A in Formel (I) ein geradkettiger $C_4$- bis $C_6$-Alkylenrest.

Weiterhin bevorzugt sind Poly(alkylenpolyphosphate) der Formel (I) worin A für einen Rest der Formel (II) steht,

worin $R^{10}$ und $R^{11}$ gleich sind und Methyl bedeuten, oder für einen Rest der Formeln (V), (VI) oder (VII),

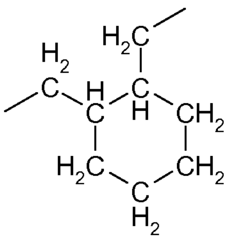
(V)

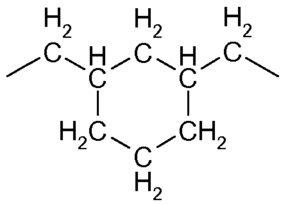
(VI)

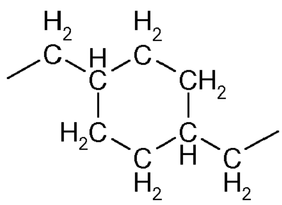
(VII).

Ebenfalls bevorzugt sind Poly(alkylenpolyphosphate) der Formel (I), worin A für einen Rest der Formel $-CHR^5-CHR^6-(O-CHR^7-CHR^8)_a-$, worin a eine Zahl von 1 bis 2 ist und $R^5$, $R^6$, $R^7$ und $R^8$ gleich sind und H bedeuten oder für einen Rest der Formel $-(CHR^5-CHR^6-O)_c-R^9-(O-CHR^7-CHR^8)_d-$ steht, worin c und d unabhängig voneinander für eine ganze Zahl von 1 bis 2 stehen, $R^9$ für einen Rest der Formel (II) steht, wobei $R^{10}$ und $R^{11}$ gleich sind und Methyl bedeuten.

Bevorzugt sind erfindungsgemäße Phosphorsäureester-Zubereitungen, die eine Oligomerenmischung a), enthaltend mindestens drei Poly(alkylenphosphate) der Formel (I),

worin

$R^1$, $R^2$, $R^3$ und $R^4$ unabhängig voneinander jeweils für einen geradkettigen oder verzweigten $C_1$- bis $C_4$-Alkylrest oder für einen $C_1$- oder $C_2$-Alkoxyethylrest stehen,

A für einen geradkettigen oder verzweigten $C_4$- bis $C_{10}$-Alkylenrest steht, oder

A für einen Rest der Formel $-CH_2-CH=CH-CH_2-$, einen Rest der Formel $-CH_2-C\equiv C-CH_2-$, einen Rest der Formel $-CHR^5-CHR^6-(O-CHR^7-CHR^8)_a-$, einen Rest der Formel $-CHR^5-CHR^6-S(O)_b-CHR^7-CHR^8-$, oder für einen Rest der Formel $-(CHR^5-CHR^6-O)_c-R^9-(O-CHR^7-CHR^8)_d-$ steht,

worin

a für eine ganze Zahl von 1 bis 5 steht,

b für eine ganze Zahl von 0 bis 2 steht,

c und d unabhängig voneinander für eine ganze Zahl von 1 bis 5 stehen,

$R^5$, $R^6$, $R^7$ und $R^8$ unabhängig voneinander für H oder Methyl stehen,

$R^9$ für einen Rest der Formel $-CH_2-CH=CH-CH_2-$, einen Rest der Formel $-CH_2-C\equiv C-CH_2-$, einen 1,2-Phenylenrest, einen 1,3-Phenylenrest, einen 1,4-Phenylenrest, oder für einen Rest der Formel (II)

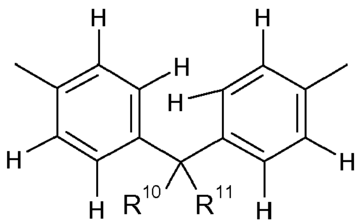
(II),

einen Rest der Formel (III)

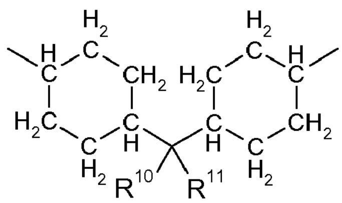
(III),

einen Rest der Formel (IV)

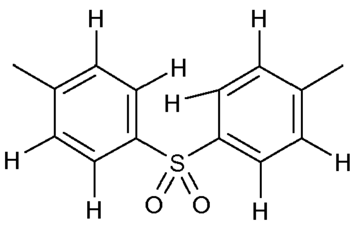

(IV),

oder einen Rest der Formel $-C(=O)-R^{12}-C(=O)-$ steht,
wobei
$R^{10}$ und $R^{11}$ unabhängig voneinander jeweils für H oder $C_1$- oder $C_2$-Alkyl stehen,
$R^{12}$ für einen geradkettigen oder verzweigten $C_2$- bis $C_6$-Alkylenrest, einen 1,2-Phenylenrest, einen 1,3-Phenylenrest, oder einen 1,4-Phenylenrest stehen, und
*n* für eine ganze Zahl von 0 bis 100 steht,
enthalten.

Ganz besonders bevorzugt sind erfindungsgemäße Phosphorsäureester-Zubereitungen, die eine Oligomerenmischung a), enthaltend mindestens drei Poly(alkylenphosphate) der Formel (I)
worin
$R^1$, $R^2$, $R^3$ und $R^4$ unabhängig voneinander jeweils für einen geradkettigen oder verzweigten $C_1$- bis $C_4$-Alkylrest oder für einen n-Butoxyethylrest stehen,
A für einen geradkettigen $C_4$- bis $C_6$-Alkylenrest steht, oder
A für einen Rest der Formel $-CH_2-CH=CH-CH_2-$, einen Rest der Formel $-CH_2-C\equiv C-CH_2-$, einen Rest der Formel $-CHR^5-CHR^6-(O-CHR^7-CHR^8)_a-$, einen Rest der Formel $-CHR^5-CHR^6-S(O)_b-CHR^7-CHR^8-$, oder für einen Rest der Formel $-(CHR^5-CHR^6-O)_c-R^9-(O-CHR^7-CHR^8)_d-$ steht,
worin
a für eine ganze Zahl von 1 bis 5 steht,
b für eine ganze Zahl von 0 bis 2 steht,
c und d unabhängig voneinander für eine ganze Zahl von 1 bis 5 stehen,
$R^5$, $R^6$, $R^7$ und $R^8$ unabhängig voneinander für H oder Methyl stehen,
$R^9$ für einen Rest der Formel $-CH_2-CH=CH-CH_2-$, einen Rest der Formel $-CH_2-C\equiv C-CH_2-$, einen 1,2-Phenylenrest, einen 1,3-Phenylenrest, einen 1,4-Phenylenrest, oder für einen Rest der Formel (II)

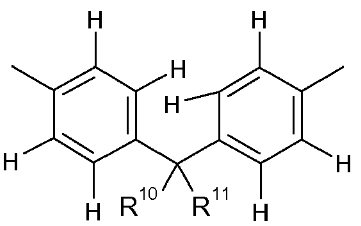

(II),

einen Rest der Formel (III)

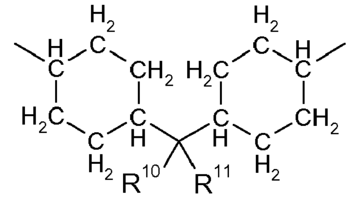

(III),

einen Rest der Formel (IV)

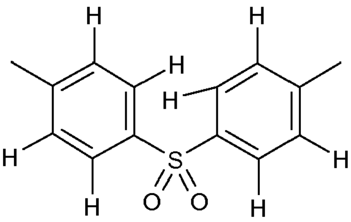
(IV),

oder einen Rest der Formel $-C(=O)-R^{12}-C(=O)-$ steht,
wobei
$R^{10}$ und $R^{11}$ unabhängig voneinander jeweils für H oder $C_1$- oder $C_2$-Alkyl stehen,
$R^{12}$ für einen geradkettigen oder verzweigten $C_2$- bis $C_6$-Alkylenrest, einen 1,2-Phenylenrest, einen 1,3-Phenylenrest, oder einen 1,4-Phenylenrest stehen, und
*n* für eine ganze Zahl von 0 bis 100 steht,
enthalten.

Insbesondere bevorzugt sind erfindungsgemäße Phosphorsäureester-Zubereitungen, die eine Oligomerenmischung a), enthaltend mindestens drei Poly(alkylenphosphate) der Formel (I)
worin
$R^1$, $R^2$, $R^3$ und $R^4$ gleich sind und für Ethyl, n-Propyl, iso-Propyl, n-Butyl, iso-Butyl oder n-Butoxyethyl stehen,
A für einen geradkettigen $C_4$- bis $C_6$-Alkylenrest steht, oder
A für einen Rest der Formeln

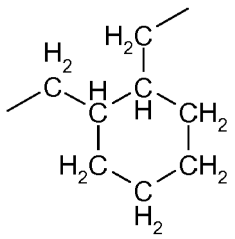
(V)
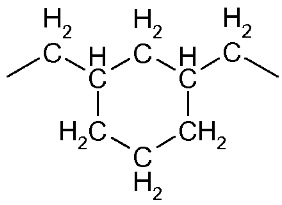
(VI) oder
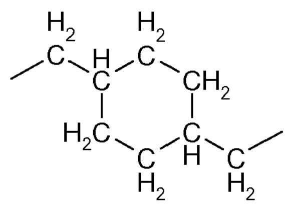
(VII)

steht, oder
A für einen Rest $-CHR^5-CHR^6-(O-CHR^7-CHR^8)_a-$ steht, worin a eine ganze Zahl von 1 bis 2 ist und $R^5$, $R^6$, $R^7$ und $R^8$ gleich sind und für H stehen, oder für einen Rest $-(CHR^5-CHR^6-O)_c-R^9-(O-CHR^7-CHR^8)_d-$, worin c und d unabhängig voneinander für eine ganze Zahl von 1 bis 2 stehen, $R^5$, $R^6$, $R^7$ und $R^8$ gleich sind und für H stehen, $R^9$ für einen Rest der Formel (II) steht, wobei $R^{10}$ und $R^{11}$ gleich sind und für Methyl stehen,
und
*n* für eine ganze Zahl von 0 bis 20 steht,
enthalten.

Vorzugsweise sind die in den erfindungsgemäßen Phosphorsäureester-Zubereitungen enthaltenen Oligomerenmischungen a) und die darin enthaltenen Poly(alkylenphosphate) halogenfrei. Der Begriff "halogenfrei" im Sinne der vorliegenden Erfindung bedeutet, dass die Poly(alkylenphosphate) der Formel (I) die Elemente Fluor, Chlor, Brom und/oder Iod nicht enthalten und dass die in den erfindungsgemäßen Phosphorsäureester-Zubereitungen enthaltenen Oligomerenmischungen a) keine anderen Substanzen in einer Menge enthalten, die einen Gehalt an einem oder mehreren der Elementen Fluor, Chlor, Brom und Iod von größer als 5000 ppm bezogen auf die Oligomerenmischung a) verursacht.

Die in den erfindungsgemäßen Phosphorsäureester-Zubereitungen enthaltenen Oligomerenmischungen a) enthalten mindestens drei, bevorzugt mehr als drei verschiedene Poly(alkylenphosphate) der allgemeinen Formel (I), die sich mindestens in der Anzahl *n* der Repetiereinheiten und damit in ihrer Molmasse voneinander unterscheiden. Zur Beschreibung solcher Oligomerensmischungen benutzt der Fachmann geeignete Mittelwerte, wie beispielsweise die zahlenmittlere Molmasse $M_n$ und den Mittelwert der Anzahl der Repetiereinheiten $\bar{n}$ der in der Oligomerenmischung enthaltenen Moleküle der Formel (I).

Erfindungsgemäß wird die zahlenmittlere Molmasse $M_n$ der in der Oligomerenmischung a) enthaltenen Poly(alkylenphosphate) der Formel (I) durch Gelpermeationschromatographie mit Tetrahydrofuran als Elutionsmittel gegen Polystyrolstandards bestimmt. Diese Methode ist dem Fachmann bekannt, beispielsweise aus DIN 55672-1:2007-08.

Aus $M_n$ lässt sich unter Berücksichtigung der Stöchiometrie der Formel (I) der Mittelwert der Anzahl der Repetiereinheiten $\bar{n}$ der in der Oligomerenmischung a) enthaltenen Poly(alkylenphosphate) leicht berechnen (siehe Herstellungsbeispiel).

Bei den in den erfindungsgemäßen Phosphorsäureester-Zubereitungen enthaltenen Phosphorsäureestern b) handelt es sich bevorzugt um Ester der Orthophosphorsäure mit gleich oder verschieden substituierten Alkyl-, Alkylen-, Alkyoxyalkylen-, Arylalkyl-, Aryl-, Arylen- oder Hetarylresten. Es kann sich auch um Mischungen verschiedener Ester handeln, wie sie bei technischen Produkten dieser Art häufig anzutreffen sind.

Bevorzugt handelt es sich bei den Phosphorsäureestern b) um Verbindungen der Formel (VIII)

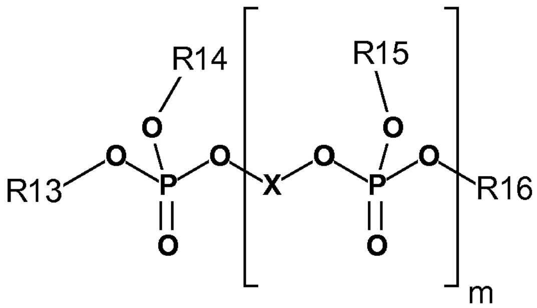

(VIII)

worin

$R^{13}$, $R^{14}$, $R^{15}$ und $R^{16}$ unabhängig voneinander jeweils für geradkettiges oder verzweigtes $C_4$- bis $C_{12}$-Alkyl, $C_4$- bis $C_{12}$-Alkoxyalkyl, $C_3$- bis $C_{12}$-Chloralkyl, $C_3$- bis $C_{12}$-Dichloralkyl oder für gegebenenfalls ein- oder mehrfach durch $C_1$- bis $C_4$-Alkyl substituiertes $C_6$- bis $C_{10}$-Aryl stehen,

X für einen $C_4$- bis $C_8$-Alkylenrest, einen 1,2-Phenylenrest, einen 1,3-Phenylenrest, einen 1,4-Phenylenrest oder einen Rest der Formel (II) steht,

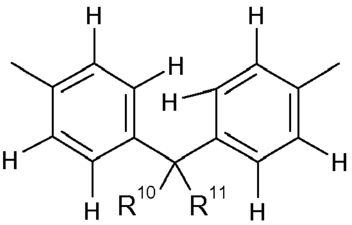

worin

$R^{10}$ und $R^{11}$ die oben angegebene Bedeutung haben,

und

m für 0 oder 1 steht.

Besonders bevorzugt handelt es sich bei den Phosphorsäureestern b) um Verbindungen der Formel (VIII) worin

$R^{13}$, $R^{14}$, $R^{15}$ und $R^{16}$ unabhängig voneinander für gegebenenfalls ein- oder mehrfach durch $C_1$- bis $C_4$-Alkyl substituiertes Phenyl stehen,

X für einen $C_4$- bis $C_8$-Alkylenrest, einen 1,2-Phenylenrest, einen 1,3-Phenylenrest, einen 1,4-Phenylenrest oder einen Rest der Formel (II) steht,

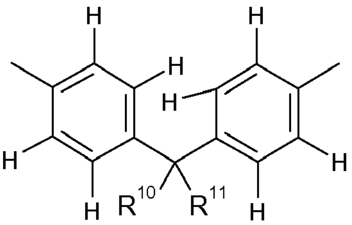

Worin $R^{10}$ und $R^{11}$ die oben angegebene Bedeutung haben,
und m für 0 oder 1 steht.

Beispiele für die bevorzugten Phosphorsäureester b) sind Triphenylphosphat, Diphenylkresylphosphat, Trikresylphosphat, isopropylierten oder butylierten Arylphosphaten, Bisphenol-A-bis(diphenylphosphat), Resorcin-bis(diphenylphosphat), Hydrochinon-bis(diphenylphosphat), Neopentylglycol-bis(diphenylphosphat), Triisobutylphosphat, Tributoxyethylphosphat, Tris(chlorisopropyl)phosphat und Tris(dichloropropyl)phosphat oder deren Mischungen.

Die Phosporsäureester b) sind kommerziell erhältliche Produkte oder können im bekannter Weise hergestellt werden. Als Phosporsäureester b) können auch technische Produkte eingesetzt werden. Dabei ist es bevorzugt, solche technischen Produkte zu verwenden, die als "neutrale" Phosphorsäureester bezeichnet werden, d.h. deren Säurezahl weniger als 10 mg KOH/g, bevorzugt weniger als 5,0 mg KOH/g und besonders bevorzugt weniger als 2,0 mg KOH/g beträgt.

Die Oligomerenmischungen a) können prinzipiell hergestellt werden durch dem Fachmann bekannte Methoden zur Herstellung von Alkylphosphaten. Beispielsweise können die Oligomerenmischungen a) hergestellt werden durch die Reaktion von Alkyldichlorphosphaten der Formel $MO\text{-}POCl_2$, worin M für einen Rest $R^1$, $R^2$, $R^3$ oder $R^4$ steht und $R^1$, $R^2$, $R^3$ und $R^4$ die oben angegebenen allgemeinen und bevorzugten Bedeutungen haben, mit Dihydroxyverbindungen der Formel HO-A-OH, worin A die oben angegebenen allgemeinen und bevorzugten Bedeutungen hat, und einer oder mehrerer Monohydroxyverbindungen M-OH, worin M die oben angegebene Bedeutungen hat, oder durch Reaktion von Dihydroxyverbindungen der Formel HO-A-OH, worin A die oben angegebenen allgemeinen und bevorzugten Bedeutungen hat, mit Phosphoroxychlorid $POCl_3$ und einer oder mehreren Monohydroxyverbindungen M-OH, worin M für einen Rest $R^1$, $R^2$, $R^3$ oder $R^4$ steht, und $R^1$, $R^2$, $R^3$ und $R^4$ die oben angegebenen allgemeinen und bevorzugten Bedeutungen haben, oder durch Reaktion eines oder mehrerer Trialkylphosphate $(MO)_3PO$, worin M die oben angegebene Bedeutung hat, mit Phosphorpentoxid $P_2O_5$ und einem cyclischen Ether.

Erfindungsgemäß bevorzugt ist die Herstellung durch Reaktion von Dihydroxyverbindungen HO-A-OH, worin A die oben angegebenen allgemeinen und bevorzugten Bedeutungen hat, mit Phosphoroxychlorid $POCl_3$ und mindestens einer Monohydroxyverbindung M-OH, worin M für einen Rest $R^1$, $R^2$, $R^3$ oder $R^4$ steht, und $R^1$, $R^2$, $R^3$ und $R^4$ die oben angegebenen allgemeinen und bevorzugten Bedeutungen haben.

Weiterer Gegenstand der vorliegenden Erfindung ist ein Verfahren zur Herstellung der erfindungsgemäßen Phosporsäureester-Zubereitungen, dadurch gekennzeichnet, dass man eine Oligomerenmischung a) in deren oben angegebenen allgemeinen oder bevorzugten Bedeutung und mindestens einen Phosporsäureester b) in dessen oben angegebener allgemeiner oder bevorzugter Bedeutung miteinander vermischt.

Im allgemeinen enthält die erfindungsgemäße Phosphorsäureester-Zubereitung 30 bis 70 Gew.-%, bevorzugt 40 bis 60 Gew.-% Oligomerenmischung a) und 30 bis 70 Gew.-%, bevorzugt 40 bis 60 Gew.-% an mindestens einem Phosporsäureester b), bezogen auf die gesamte Zubereitung.

Bevorzugt handelt es sich bei den erfindungsgemäßen Phosphorsäureester-Zubereitungen um bei etwa 23 °C flüssige Stoffe.

Bevorzugt weisen die erfindungsgemäßen Phosphorsäureester-Zubereitungen bei 23 °C eine Viskosität zwischen 20 und 5000 mPas auf. Besonders bevorzugt beträgt die Viskosität bei 23 °C zwischen 20 und 1000 mPas.

Bevorzugt können die erfindungsgemäßen Phosphorsäureester-Zubereitungen neben den Komponenten a) und b) je nach Anwendungsgebiet ein oder mehrere Hilfsmittel, beispielsweise aus der Gruppe der Lösungsmittel, Antioxidantien, Stabilisatoren und Farbstoffen, enthalten. Als solche Hilfsmittel kommen beispielsweise in Frage:

- Lösungsmittel, wie z. B. Alkylester aliphatischer oder aromatischer Di- oder Tricarbonsäuren,

- Antioxidantien und Stabilisatoren, wie z. B. sterisch gehinderte Trialkylphenole, Alkylester der 3-(3,5-Di-tert.-butyl-4-hydroxyphenyl)-propionsäure, Benzofuran-2-one, sekundäre aromatische Amine, Phosphite, Phenothiazine oder Tocopherole, und

- Farbstoffe, wie z. B. lösliche organische Farbstoffe, Eisenoxidpigmente oder Ruße.

Die erfindungsgemäßen Phosphorsäureester-Zubereitungen eignen sich zur Verwendung als Flammschutzmittel und zur Herstellung von Flammschutzmittel-Zubereitungen. Weiterer Gegenstand der vorliegenden Erfindung ist die Verwendung der erfindungsgemäßen Phosphorsäureester-Zubereitungen als Flammschutzmittel.

Die Phosphorsäureester-Zubereitungen können als Flammschutzmittel in allen dem Fachmann bekannten Anwendungen für Flammschutzmittel verwendet werden. Bevorzugt wird die erfindungsgemäße Phosporsäureester-Zubereitung als Flammschutzmittel für

- synthetische Polymere, wie Polyolefine, Polyvinylchlorid, Polycarbonate, Styrol-basierte (Co-)Polymere, Polyamide, Polyester, Polyurethane und Duroplaste wie Epoxidharze, Ungesättigte Polyesterharze und Phenol-Formaldehydharze,

- Werkstoffe pflanzlichen Ursprungs, wie Holz, Holz-Kunststoff-Komposite, Papier und Pappe, und
- Werkstoffe tierischen Ursprungs, wie Leder, verwendet.

Besonders bevorzugt werden die erfindungsgemäßen Phosphorsäureester-Zubereitungen als Flammschutzmittel für Polyurethane verwendet. Ganz besonders bevorzugt werden die Phosphorsäureester-Zubereitungen als Flammschutzmittel für Polyurethanschaumstoffe verwendet.

Bei den Polyurethanschaumstoffen handelt es sich um Polyurethanweichschaumstoffe oder um Polyurethanhartschaumstoffe. Bevorzugt werden die Phosphorsäureester-Zubereitungen als Flammschutzmittel für Polyurethanweichschaumstoffe verwendet, welche aus Polyether-Polyolen hergestellt werden, d.h. Polyether-Polyurethanweichschaumstoffe. In einer alternativen, ebenfalls bevorzugten Ausführungsform der Erfindung werden die Phosphorsäureester-Zubereitungen als Flammschutzmittel für Polyurethanweichschaumstoffe verwendet, welche aus Polyester-Polyolen hergestellt werden, d.h. Polyester-Polyurethanweichschaumstoffe.

Gegenstand der vorliegenden Erfindung sind weiterhin auch Polyurethane, die mindestens eine erfindungsgemäße Phosphorsäureester-Zubereitung enthalten. Durch geeignete Wahl der Menge an enthaltenen Phosphorsäureester-Zubereitungen lassen sich diese Polyurethane flammwidrig herstellen.

Die erfindungsgemäßen flammwidrigen Polyurethane können hergestellt werden, indem man organische Polyisocyanate mit Verbindungen mit mindestens zwei gegenüber Isocyanaten reaktionsfähigen Wasserstoffatomen mit üblichen Treibmitteln, Stabilisatoren, Aktivatoren und/oder weiteren üblichen Hilfs- und Zusatzstoffen in Gegenwart von mindestens einer erfindungsgemäßen Phosphorsäureester-Zubereitung umsetzt.

Die erfindungsgemäßen Phosphorsäureester-Zubereitungen werden in einer Menge von 0,5 bis 30 Gewichtsteilen, bevorzugt 3 bis 25 Gewichtsteile, bezogen auf 100 Gewichtsteile Polyolkomponente, eingesetzt.

Bei den Polyurethanen handelt es sich um Polymere auf Isocyanatbasis, die vorwiegend Urethan- und/oder Isocyanurat- und/oder Allophanat- und/oder Uretdion- und/oder Harnstoff- und/oder Carbodiimidgruppen aufweisen. Die Herstellung von Polymeren auf Isocyanatbasis ist an sich bekannt und z. B. in DE-OS 16 94 142, DE-OS 16 94 215 und DE-OS 17 20 768 sowie im Kunststoff-Handbuch Band VII, Polyurethane, herausgegeben von G. Oertel, Carl-Hanser-Verlag München, Wien 1993, beschrieben.

Bei den erfindungsgemäßen flammwidrigen Polyurethanen handelt es sich um duroplastische Polyurethane, Polyurethanschaumstoffe, Polyurethan-Elastomere, thermoplastische Polyurethane, Polyurethan-Beschichtungen und -Lacke, Polyurethan-Klebstoffe und -Bindemittel oder Polyurethan-Fasem.

In einer bevorzugten Ausführungsform der Erfindung handelt es sich bei den erfindungsgemäßen flammwidrigen Polyurethanen um flammwidrige Polyurethanschaumstoffe.

Polyurethanschaumstoffe werden grob in weiche und harte Schaumstoffe unterschieden. Zwar können Weich- und Hartschaumstoffe grundsätzlich in etwa die gleiche Raumdichte und Zusammensetzung aufweisen, jedoch sind die Polyurethanweichschäume nur gering vernetzt und weisen bei Druckbelastung nur einen geringen Verformungswiderstand auf. Im Gegensatz dazu besteht die Struktur der Polyurethanhartschäume aus hoch vernetzten Einheiten und der Polyurethanhartschaum zeigt bei Druckbelastung einen sehr hohen Verformungswiderstand. Der typische Polyurethanhartschaum ist geschlossenzellig und weist nur eine niedrige Wärmeleitzahl auf. Primär wird bei der Herstellung von Polyurethanen, die über die Reaktion von Polyolen mit Isocyanaten abläuft, über die Struktur und Molmasse des Polyols sowie über die Reaktivität und Anzahl (Funktionalität) der im Polyol enthaltenen Hydroxylgruppen die spätere Schaumstruktur und seine Eigenschaften beeinflusst. Weitere Einzelheiten zu Hart- und Weichschaumstoffen, den zu ihrer Herstellung einsetzbaren Ausgangsstoffen sowie zu Verfahren zu ihrer Herstellung finden sich in Norbert Adam, Geza Avar, Herbert Blankenheim, Wolfgang Friederichs, Manfred Giersig, Eckehard Weigand, Michael Halfmann, Friedrich-Wilhelm Wittbecker, Donald-Richard Larimer, Udo Maier, Sven Meyer-Ahrens, Karl-Ludwig Noble und Hans-Georg Wussow: "Polyurethanes", Ullmann's Encyclopedia of Industrial Chemistry Release 2005, Electronic Release, 7th ed., chap. 7 ("Foams"), Wiley-VCH, Weinheim 2005.

Bevorzugt weisen die erfindungsgemäßen Polyurethanschaumstoffe Raumgewichte von 10 - 150 kg/$m^3$ auf. Besonders bevorzugt weisen sie Raumgewichte von 20 - 50 kg/$m^3$ auf.

Für die Herstellung der Schaumstoffe auf Isocyanatbasis werden folgende Ausgangskomponenten eingesetzt:

1) Aliphatische, cycloaliphatische, araliphatische, aromatische und heterocyclische Polyisocyanate (z. B. W. Siefken in Justus Liebigs Annalen der Chemie, 562, S. 75-136), beispielsweise solche der Formel $Q(NCO)_n$, in der n = 2 bis 4, vorzugsweise 2 bis 3, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen, bedeuten. Besonders bevorzugt werden in

der Regel die technisch leicht zugänglichen Polyisocyanate, die sich vom 2,4- und/oder 2,6-Toluylendiisocyanat bzw. von 4,4'- und/oder 2,4'-Diphenylmethandiisocyanat ableiten.

2) Verbindungen mit mindestens zwei gegenüber Isocyanaten reaktionsfähigen Wasserstoffatomen mit einem Molekulargewicht von 400 bis 8.000 g/mol ("Polyolkomponente"). Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen. Soll der Polyurethanschaum ein Weichschaum sein, so werden bevorzugt Polyole mit Molmassen von 2.000 bis 8.000 g/mol und 2 bis 6 Hydroxylgruppen pro Molekül eingesetzt. Soll hingegen ein Hartschaum hergestellt werden, so werden bevorzugt hochverzweigte Polyole mit Molmassen von 400 bis 1.000 g/mol und 2 bis 8 Hydroxylgruppen pro Molekül eingesetzt. Bei den Polyolen handelt es sich um Polyether und Polyester sowie Polycarbonate und Polyesteramide, wie sie für die Herstellung von homogenen und von zellförmigen Polyurethanen an sich bekannt sind und wie sie etwa in der DE-OS 28 32 253 beschrieben werden. Die mindestens zwei Hydroxylgruppen aufweisenden Polyether und Polyester sind erfindungsgemäß bevorzugt.

Die erfindungsgemäßen Polyurethanschaumstoffe lassen sich also durch entsprechende, leicht dem Stand der Technik zu entnehmende Wahl der Ausgangsstoffe als Hart- oder Weichschaumstoffe herstellen.

Gegebenenfalls sind weitere Ausgangskomponenten Verbindungen mit mindestens zwei gegenüber Isocyanaten reaktionsfähigen Wasserstoffatomen und einem Molekulargewicht von 32 bis 399 g/mol. Auch in diesem Fall versteht man hierunter Hydroxylgruppen und/oder Aminogruppen und/oder Thiogruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4 gegenüber Isocyanaten reaktionsfähige Wasserstoffatome auf. Beispiele hiefür werden ebenfalls in der DE-OS 28 32 253 beschrieben.

3) Wasser und/oder leicht flüchtige organische Substanzen als Treibmittel, z. B. n-Pentan, i-Pentan, Cyclopentan, Aceton, halogenhaltige Alkane, wie Trichlormethan, Methylenchlorid oder Chlorfluoralkane, $CO_2$ und andere.

4) Gegebenenfalls werden Hilfs- und Zusatzmittel mitverwendet, wie Katalysatoren der an sich bekannten Art, oberflächenaktive Zusatzstoffe, wie Emulgatoren und Schaumstabilisatoren, Reaktionsverzögerer, z. B. sauer reagierende Stoffe wie Salzsäure oder organische Säurehalogenide, ferner Zellregler der an sich bekannten Art, wie Paraffine oder Fettalkohole und Dimethylpolysiloxane sowie Pigmente oder Farbstoffe und weitere Flammschutzmittel, ferner Stabilisatoren gegen Alterungs- und Witterungseinflüsse, Kernverfärbungsinhibitoren, Weichmacher und fungistatisch und bakteriostatisch wirkende Substanzen sowie Füllstoffe, wie Bariumsulfat, Kieselgur, Ruß oder Schlämmkreide (DE-OS 27 32 292). Als Kernverfärbungsinhibitoren können insbesondere sterisch gehinderte Trialkylphenole, Alkylester der 3-(3,5-Di-tert.-butyl-4-hydroxyphenyl)-propionsäure, Benzofuran-2-one, sekundäre aromatische Amine, Phosphite, Phenothiazine oder Tocopherole enthalten sein.

Als weitere Flammschutzmittel können neben den erfindungsgemäßen Phosphorsäureester-Zubereitungen in den erfindungsgemäßen Polyurethanen noch folgende Verbindungen enthalten sein:

- organische Phosphorverbindungen, wie beispielsweise Triethylphosphat, Triphenylphosphat, Diphenylkresylphosphat, Trikresylphosphat, isopropylierte oder butylierte Arylphosphate, aromatische Bisphosphate, Neopentylglycol-bis(diphenylphosphat), chlorhaltige Phosphorsäureester wie z. B. Tris(chlorisopropyl)phosphat oder Tris(dichloropropyl)phosphat, Dimethylmethanphosphonat, Diethylethanphosphonat, Dimethylpropanphosphonat, Diethylphosphinsäure-Derivate und -Salze, andere oligomere Phosphate oder Phosphonate, Hydroxylgruppen-haltige Phosphorverbindungen, 5,5-Dimethyl-1,3,2-Dioxaphosphorinane-2-oxid-Derivate, 9,10-Dihydro-9-oxa-10-phosphaphenanthren-10-oxid (DOPO) und seine Derivate,

- anorganische Phosphorverbindungen, wie beispielsweise Ammoniumphosphat, Ammoniumpolyphosphat, Melaminphosphat, Melaminpolyphosphat,

- Stickstoffverbindungen, wie beispielsweise Melamin, Melamincyanurat,

- Bromverbindungen, wie beispielsweise Alkylester einer Tetrabrombenzoesäure, bromhaltige Diole hergestellt aus Tetrabromphthalsäureanhydrid, bromhaltige Polyole, bromhaltige Diphenylether,

- anorganische Flammschutzmittel, wie beispielsweise Aluminiumhydroxid, Boehmit, Magnesiumhydroxid, Blähgraphit oder Tonmineralien.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, Carl-Hanser-Verlag, München, 1993, auf den Seiten 104 bis 123 beschrieben.

Weiterer Gegenstand der vorliegenden Erfindung ist ein Verfahren zur Herstellung von Polyurethanen durch Umsetzung von organischen Polyisocyanaten mit Verbindungen mit mindestens zwei gegenüber Isocyanaten reaktionsfähigen Wasserstoffatomen und üblichen Treibmitteln, Stabilisatoren, Katalysatoren, Aktivatoren und/oder weiteren üblichen Hilfs- und Zusatzstoffen bei 20 bis 80 °C, in dem in einer Menge von 0,5 bis 30 Gewichtsteilen bezogen auf 100 Gewichtsteile Polyolkomponente, mindestens eine erfindungsgemäße Phosphorsäureester-Zubereitung eingesetzt wird. Bevorzugt werden die Phosphorsäureester-Zubereitungen in einer Menge von 3 bis 25 Gewichtsteilen bezogen auf 100 Gewichtsteile Polyolkomponente eingesetzt.

Zur Durchführung des Verfahrens zur Herstellung von erfindungsgemäßen Polyurethanen werden die oben beschriebenen Reaktionskomponenten nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der US 2,764,565 beschrieben werden. Einzelheiten über Verarbeitungseinrichtungen, die auch erfindungsgemäss in Frage kommen, werden im Kunststoff-Handbuch Band VII, Polyurethane, herausgegeben von G. Oertel, Carl-Hanser-Verlag, München, Wien 1993, auf den Seiten 139 bis 192 beschrieben.

Nach dem erfindungsgemäßen Verfahren lassen sich auch kalthärtende Schaumstoffe herstellen (GB-PS 11 62 517, DE-OS 21 53 086). Selbstverständlich können aber auch Schaumstoffe durch Blockverschäumung oder nach dem an sich bekannten Doppeltransportbandverfahren hergestellt werden. Polyisocyanuratschaumstoffe werden nach den hierfür bekannten Verfahren und Bedingungen hergestellt.

Das erfindungsgemäße Verfahren erlaubt die Herstellung von Polyurethanschaumstoffen als Hart- oder Weichschäume in kontinuierlicher oder diskontinuierlicher Herstellungsweise oder als geschäumte Formartikel. Bevorzugt ist das erfindungsgemäße Verfahren bei der Herstellung von Weichschaumstoffen, die durch ein Blockverschäumungsverfahren hergestellt werden.

Die nach der Erfindung erhältlichen Polyurethane finden bevorzugt Anwendung in Möbelpolsterungen, Textileinlagen, Matratzen, Fahrzeugsitzen, Armlehnen, Bauelementen, Sitz- und Armaturverkleidungen, Kabelummantelungen, Dichtungen, Beschichtungen, Lacken, Klebstoffen, Haftvermittlern und Fasern.

Gegenstand der vorliegenden Erfindung ist die Verwendung der erfindungsgemäßen Phosphorsäureester-Zubereitungen als Hydraulikflüssigkeiten oder zur Herstellung von Hydraulikflüssigkeiten. Bevorzugt werden die Phosphorsäureester-Zubereitungen in flammwidrigen Hydraulikflüssigkeiten verwendet.

Die erfindungsgemäßen Phosphorsäureester-Zubereitungen lassen sich aus bekannten Komponenten nach bekannten Methoden herstellen. Die flüssigen Phosphorsäureester-Zubereitungen sind gut zu dosieren und daher sehr leicht zu verarbeiten. Die Gefahr einer unerwünschten Kontamination mit Wasser ist durch die verringerte Hygroskopie reduziert.

Anhand der nachfolgenden Beispiele wird die Erfindung näher erläutert, ohne dass dadurch eine Einschränkung der Erfindung bewirkt werden soll.

## Beispiele

### Herstellungsbeispiel

**Oligomerenmischung a) aus Poly(alkylenphosphaten) der Formel (I) mit $R^1 = R^2 = R^3 = R^4$ = Ethyl und A = $-CH_2CH_2OCH_2CH_2-$**

Ein Reaktor mit Rührer, Tropftrichter, Rückflusskühler und Vakuumeinrichtung wurde mit 306,7 Gewichtsteilen Phosphoroxychlorid befüllt. Das Phosphoroxychlorid wurde auf 10 - 20 °C temperiert. Bei einem Vakuum von 500 - 700 mbar wurden 118,7 Gewichtsteile Diethylenglycol zugetropft. Nach Ende des Zutropfens wurde der Druck weiter bis auf schließlich 5 - 15 mbar abgesenkt und die Temperatur auf 20 - 30 °C angehoben. Ein nahezu farbloser, flüssiger Rückstand verblieb.

In einem weiteren Reaktor mit Rührer, Tropftrichter und Rückflusskühler wurden bei 20 - 30 °C 618,2 Gewichtsteile Ethanol vorgelegt und mit dem oben erhaltenen Rückstand versetzt. Die Mischung wurde weiter bei 20 - 30 °C bis zum Abklingen der Reaktion gerührt, und dann durch Zugabe von konzentrierter Natronlauge neutralisiert. Daraufhin wurde so viel Dichlormethan und Wasser zugefügt, dass zwei klare flüssige Phasen entstanden. Diese wurden getrennt und die organische Phase durch Destillation vom Dichlormethan, überschüssigem Ethanol und Wasser befreit. Als

Rückstand verblieben die erfindungsgemäßen Oligomerenmischungen in Form einer farbloser Flüssigkeiten. Die Viskositäten des hergestellten Produktes wurden mit einem handelsüblichen Kugelfall-Viskosimeter bei 23 °C bestimmt und betrug 58 [mPas].

**Bestimmung des Mittelwerts der Anzahl der Repetiereinheiten $\bar{n}$ der in der Oligomerenmischung a) gemäß obiger Herstellvorschrift enthaltenen Moleküle entsprechend der Formel (I)**

Das nach obiger Vorschrift hergestellte Produkt erwies sich nach Analyse durch Gelpermeationschromatographie (GPC) als Oligomerenmischungen. Die zahlenmittleren Molmassen $M_n$ der Oligomerenmischungen wurden durch GPC mit Tetrahydrofuran als Elutionsmittel gegen Polystyrolstandards in Anlehnung an die Methode aus DIN 55672-1:2007-08 bestimmt. Der Mittelwert der Anzahl der Repetiereinheiten $\bar{n}$ der in der Oligomerenmischung enthaltenen Poly(alkylenphosphate) entsprechend der Formel (I) wurde aus der gemessenen zahlenmittleren Molmasse $M_n$ nach folgender Formel berechnet:

$$\bar{n} = (M_n - M_E)/M_R$$

mit

- $\bar{n}$ : Mittelwert der Anzahl der Repetiereinheiten der in der Oligomerenmischung enthaltenen Poly(alkylenphosphate) der Formel (I),
- $M_n$: zahlenmittlere Molmasse in g/mol durch Gelpermeationschromatographie bestimmt,
- $M_E$: Summe der Molmassen der Endgruppen in g/mol und
- $M_R$: Molmasse der Repetiereinheit in g/mol.

Für die hergestellte Oligomerenmischungen aus Poly(alkylenphosphaten) der Formel (I) mit $R^1 = R^2 = R^3 = R^4$ = Ethyl und A = $-CH_2CH_2OCH_2CH_2-$ gilt $M_E$ = 182,16 g/mol und $M_R$ = 194,14 g/mol. Für $M_n$ ergab sich ein Wert von 462 und damit $\bar{n}$ = 1,44.

**Bestimmung der Wasseraufnahme**

Für die Versuche wurde die nach obiger Vorschrift hergestellte Oligomerenmischung a) verwendet. Die Wasseraufnahme wurde an der reinen Oligomerenmischung a) (Vergleichsversuch M-V1) sowie an Mischungen aus 50 Gew.-% Oligomerenmischung a) und 50 Gew.-% Phosphorsäureester b) gemäß Tabelle 1 bestimmt. Alle in der Tabelle 1 aufgeführten Phosphorsäureester waren kommerziell erhältliche Produkte und hatten eine Säurezahl von < 0,1 mg KOH/g. Zur Bestimmung der Wasseraufnahme wurden jeweils 100 ml der zu messenden Mischung in ein 250 ml Becherglas (Höhe 12 cm, Durchmesser 6 cm) gefüllt und in einer Klimakammer offen bei 23 °C und 50 % relativer Luftfeuchtigkeit für 7 Tage gelagert. Der Wassergehalt der Mischungen wurde mittels Karl-Fischer-Titration nach DIN 51777 bestimmt. Vor der Wasserbestimmung wurden die Proben jeweils durch Rühren homogenisiert.

**Tabelle 1: Verwendete Phosphorsäureester b) und ihre Wasserlöslichkeit**

| Bezeichnung | Chemischer Name | Löslichkeit in Wasser bei 25 °C [g/l] |
|---|---|---|
| TEP | Triethylphosphat | mischbar |
| TiBP | Tri-iso-butylphosphat | 0,27 |
| TDCP | Tris(2,3-dichlorisopropyl)-phosphat | 0,10 |
| DPK | Diphenylkresylphosphat | 0,0026 |
| RDP | Resorcin-bis(diphenylphosphat) | 0,0011 |
| TCPP | Tris (2-chloroisopropyl)-phosphat | 1,08 |
| TBPP | Tertiär-butyliertes Triphenylphosphat | 0,0027 |
| TBEP | Tris-(2-Butoxyethyl)-phosphat | 0,70 |
| IPP | Isopropyliertes Triphenylphosphat | 0,00033 |

**Tabelle 2: Wasseraufnahme nach 7 Tagen Lagerung von erfindungsgemäßen Phosporsäureester-Mischungen aus 50 Gew.-% Oligomerenmischung a) und 50 Gew.-% Phosphorsäureester b) (Beispiele M-B1 bis M-B8) und nicht erfindunsgemäße Vergleichsbeispiele M-V1 bis M-V2**

| Mischung | Neutraler Phosphorsäureester | Wasseraufnahme nach 7 Tagen Lagerung [Gew.-%] |
|---|---|---|
| M-V1 | - | 2,30 |
| M-V2 | TEP | 3,09 |
| M-B1 | TiBP | 1,91 |
| M-B2 | DPK | 0,91 |
| M-B3 | IPP | 0,70 |
| M-B4 | TBPP | 0,87 |
| M-B5 | RDP | 0,90 |
| M-B6 | TCPP | 1,24 |
| M-B7 | TDCP | 0,87 |
| M-B8 | TBEP | 2,05 |

**Auswertung der Ergebnisse zur Wasseraufnahme**

Nach den in Tabelle 2 aufgelisteten Ergebnissen zeigt die Oligomerenmischung a) alleine (Vergleichsbeispiel M-V 1) unter den Testbedingungen eine erhebliche Wasseraufnahme. Ohne aufwändige Vorkehrungen nimmt das Produkt bald eine Wassermenge auf, die in technischen Anwendungen störend sein kann.

Die erfindungsgemäßen Phosphorsäureester-Zubereitungen M-B 1 bis M-B 8 zeigen eine deutlich geringere Wasseraufnahme als die Oligomerenmischung a) alleine. Damit zeichnen sie sich durch eine verringerte Hygroskopie aus, was in wasserempfindlichen technischen Anwendungen einen Vorteil darstellt.

Die nicht erfindungsgemäße Mischung M-V 2 aus der Oligomerenmischung a) und dem Phosphorsäureester Triethylphosphat mit einer Wasserlöslichkeit bei 25 °C von mehr als 3,0 g/l nimmt hingegen deutlich mehr Wasser auf als die Oligomerenmischung a) alleine und ist daher für wasserempfindliche technische Anwendungen deutlich schlechter geeignet.

**Herstellung von Polyurethanweichschaumstoffen**

**Tabelle 3: Verwendete Rohstoffe zur Herstellung von Polyether-Polyurethanweichschaumstoffen**

| Komponente | Funktion | Beschreibung |
|---|---|---|
| A | Polyol | Arcol® 1105 (Bayer MaterialScience), Polyetherpolyol mit OHZ 56 mg KOH/g |
| B | Treibmittel | Wasser |
| C | Katalysator | Addocat 108® (Rhein Chemie), 70 %ige Lösung von Bis(2-dimethylaminoethyl)ether in Dipropylenglykol |
| D | Katalysator | Addocat® SO (Rhein Chemie), Zinn-II-2-ethylhexanoat |
| E | Stabilisator | Tegostab® B 8232 (Degussa), Siliconstabilisator |
| M | Flammschutzmittel | Phosphorsäureester-Zubereitungen aus Tabelle 2 |
| G | Diisocyanat | Desmodur® T 80 (Bayer MaterialScience), Toluylendiisocyanat, Isomerenmischung |

**Herstellung von Polyether-Polyurethanweichschaumstoffe**

Die Rohstoffe zur Herstellung von Polyether-Polyurethanweichschaumstoffen sind in Tabelle 3 angegeben. Die in Tabelle 4 nach Art und Menge angegebenen Komponenten mit Ausnahme des Diisocyanats (Komponente G) wurden zu einer homogenen Mischung verrührt. Dann wurde das Diisocyanat zugefügt und kurz intensiv untergerührt. Nach einer Startzeit von 15 - 20 s und einer Steigzeit von 170 - 200 s wurde ein Polyether-Polyurethanweichschaumstoff mit einem Raumgewicht von 33 kg/$m^3$ erhalten. Bei allen Versuchen wurden gleichmäßig feinporige Schaumstoffe erhalten.

**Bestimmung der Flammwidrigkeit**

Die Polyurethanweichschaumstoffe (Polyether und Polyester) wurden nach den Vorgaben des Federal Motor Vehicle Safety Standards FMVSS-302 getestet und den Brandklassen SE (selbsterlöschend), SE/NBR (selbsterlöschend/keine Brennrate), SE/BR (selbsterlöschend/mit Brennrate), BR (Brennrate) und RB (schnell brennend) zugeordnet. Die Brandversuche wurden für jedes Beispiel fünfmal durchgeführt. Das schlechteste Ergebnis jeder Fünferreihe wurde in Tabelle 4 wiedergegeben.

**Tabelle 4: Zusammensetzung (Gewichtsteile) und Prüfergebnisse der erfindungsgemäßen Beispiele B1 bis B2 und der nicht erfindunsgemäßen Vergleichsbeispiele V0 bis V1 zu Polyether-Polyurethanweichschaumstoffen**

| Beispiel | V0 | V1 | B1 | B2 |
|---|---|---|---|---|
| A | 100 | 100 | 100 | 100 |
| B | 3,0 | 3,0 | 3,0 | 3,0 |
| C | 0,08 | 0,08 | 0,08 | 0,08 |
| D | 0,16 | 0,16 | 0,16 | 0,16 |
| E | 0,80 | 0,80 | 0,80 | 0,80 |
| M-V1 | | 6 | | |
| M-B4 | | | 6 | |
| M-B5 | | | | 6 |
| G | 40,9 | 40,9 | 40,9 | 40,9 |
| MVSS-Klasse | RB | SE | SE | SE |

**Auswertung der Ergebnisse zu Polyether-Polyurethanweichschaumstoffen**

In Abwesenheit eines Flammschutzmittels (Vergleichsbeispiel V0) brennt der Polyurethanweichschaumstoff rasch ab (MVSS-Brandklasse RB). Schaumstoffe mit einer Oligomerenmischung a) alleine (Vergleichsbeispiel V1) wie auch mit den erfindungsgemäßen Phosphorsäureester-Zubereitungen (Beispiele B1 und B2) erreichen die beste MVSS-Brandklasse SE (selbsterlöschend), wenn sechs Teile Flammschutzmittel eingesetzt werden.

Beispiele B1 und B2 zeigen, dass die erfindungsgemäßen Phosphorsäureester-Zubereitungen mit reduzierter Hygroskopie die gleiche flammhemmende Wirkung wie die bekannten hygroskopischen Oligomerenmischungen a) alleine aufweisen.

**Herstellung von Polyester-Polyurethanweichschaumstoffen**

Die Rohstoffe zur Herstellung von Polyester-Polyurethanweichschaumstoffen sind in Tabelle 5 angegeben. Die in Tabelle 6 nach Art und Menge angegebenen Komponenten mit Ausnahme der beiden Diisocyanate (Komponente G und H) wurden zu einer homogenen Mischung verrührt. Dann wurden die beiden vorgemischten Diisocyanate zugefügt und kurz intensiv untergerührt. Nach einer Startzeit von 10 - 15 s und einer Steigzeit von 70 - 80 s wurde ein Polyester-Polyurethanweichschaumstoff mit einem Raumgewicht von 29 kg/$m^3$ erhalten. Die Schaumstruktur der Polyester-Polyurethanweichschaumstoffe hing von den verwendeten Flammschutzmitteln ab. Sie ist in Tabelle 6 als "gleichmäßig feinporig" ("gf") oder "ungleichmäßig grobporig" ("ug") protokolliert.

**Tabelle 5: Verwendete Rohstoffe zur Herstellung von Polyester-Polyurethanweichschaumstoffen (Beispiele B6 und B7 und nicht erfindungsgemäße Vergleichsbeispiele V2 bis V4)**

| Komponente | Funktion | Beschreibung |
|---|---|---|
| A | Polyol | Desmophen® 2200 B (Bayer MaterialScience), Polyesterpolyol mit OHZ 60 mg KOH/g |
| B | Treibmittel | Wasser |
| C | Katalysator | Niax® A-30 (Momentive), Amin |
| D | Katalysator | Addocat® 117 (Rhein Chemie), Tertiäres Amin |
| E | Stabilisator | Tegostab® B 8324 (Degussa), Siliconstabilisator |
| M-B4 und M-B5 | Flammschutzmittel | Phosphorsäureester-Zubereitungen aus Tabelle 2 |
| M-V3 | Flammschutzmittel | Mischung aus 50 Gew-% Fyrol® PNX der ICL-IP (oligomerer Phosphatester der Formel EtO-[P(=O)OEt-$CH_2CH_2$-]$_n$-P(=O)(OEt)$_2$, CAS Reg.-No 184538-58-7, $M_n$ = 640 g/mol aus GCP (s.o.), Mittelwert der Anzahl der Repetiereinheiten $\overline{n}$ = 3,01; Viskosität 1241 mPas bei 23 °C) mit 50 Gew.-% RDP |
| G | Diisocyanat | Desmodur® T 80 (Bayer MaterialScience), Toluylendiisocyanat, Isomerenmischung |
| H | Diisocyanat | Desmodur® T 65 (Bayer MaterialScience), Toluylendiisocyanat, Isomerenmischung |

**Tabelle 6: Zusammensetzung (Gewichtsteile) und Prüfergebnisse der erfindungsgemäßen Beispiele B3 bis B4 und der nicht erfindungsgemäßen Vergleichsbeispiele V2 bis V4 zu Polyester-Polyurethanweichschaumstoffen**

| Beispiel | V2 | V3 | V4 | B3 | B4 |
|---|---|---|---|---|---|
| A | 100 | 100 | 100 | 100 | 100 |
| B | 4,0 | 4,0 | 4,0 | 4,0 | 4,0 |
| C | 0,25 | 0,25 | 0,25 | 0,25 | 0,25 |
| D | 0,25 | 0,25 | 0,25 | 0,25 | 0,25 |
| E | 1,0 | 1,0 | 1,0 | 1,0 | 1,0 |
| M-V1 | | 6 | | | |
| M-V3 | | | 6 | | |
| M-B4 | | | | 6 | |
| M-B5 | | | | | 6 |
| G | 24,1 | 24,1 | 24,1 | 24,1 | 24,1 |
| H | 24,1 | 24,1 | 24,1 | 24,1 | 24,1 |
| Schaumstruktur | gf | gf | ug | gf | gf |
| MVSS-Klasse | RB | SE | - | SE | SE |

**Auswertung der Ergebnisse zu Polyester-Polyurethanweichschaumstoffen**

In Abwesenheit eines Flammschutzmittels (Vergleichsbeispiel V2) zeichnet sich der Polyester-Polyurethanweichschaumstoff durch eine gleichmäßig feinporige Schaumstruktur aus, brennt aber rasch ab (MVSS-Brandklasse RB). Der Zusatz von 6 Teilen einer Oligomerenmischung a) gemäß oben angegebener Herstellvorschrift alleine (Vergleichsbeispiel V3) verändert die Schaumstruktur nicht und ermöglicht das Erreichen der besten MVSS-Brandklasse

SE (selbsterlöschend). Nachteilig ist jedoch die hohe Hygroskopie der reinen Oligomerenmischung a) M-V1.

Eine in WO 2001/018088 A1 beschriebene Mischung aus einer Oligomerenmischung aus Poly(alkylenphosphat) der Formel EtO-[P(=O)OEt-$CH_2CH_2$-]$_n$-P(=O)$(OEt)_2$ (M-V3; CAS Reg.-No 184538-58-7, Mittelwert der Anzahl der Repetiereinheiten $\overline{n}$ = 3,01) und RDP im Massenverhältnis 1 : 1 lässt sich nicht erfolgreich zu einem Polyester-Polyurethanweichschaumstoff verarbeiten (Vergleichsbeispiel V4). Der Schaumstoff ist ungleichmäßig grobporig und damit unbrauchbar. Dies zeigt, dass die Mischung M-V3 aus dem Stand der Technik nicht mit Polyester-Polyolen verträglich ist.

Im Gegensatz dazu erlauben die erfindungsgemäßen Phosphorsäureester-Zubereitungen (Beispiele B3 und B4) die Herstellung von Schaumstoffen mit der gewünschten, gleichmäßig feinporigen Schaumstruktur. Das Beispiel B4 verwendet die erfindungsgemäße Phosphorsäureester-Zubereitung M-B5, welche wie auch M-V3 als Phosphorsäureester b) 50 Gew.-% RDP enthält, und ist daher direkt mit dem Vergleichsbeispiel V4 vergleichbar. Die Schaumstoffe aus den Beispielen B3 und B4 erreichen mit 6 Teilen Flammschutzmittel die beste MVSS-Brandklasse SE (selbsterlöschend).

Beispiele B3 und B4 zeigen, dass die erfindungsgemäßen Phosphorsäureester-Zubereitungen mit reduzierter Hygroskopie mit Polyester-Polyolen gut verarbeitbar sind und die gleiche flammhemmende Wirkung wie die bekannten hygroskopischen Oligomerenmischungen a) alleine aufweisen.

## Patentansprüche

1. Phosphorsäureester-Zubereitung **dadurch gekennzeichnet, dass** sie

i) eine Oligomerenmischung a), enthaltend mindestens drei Poly(alkylenphosphate) entsprechend der Formel (I)

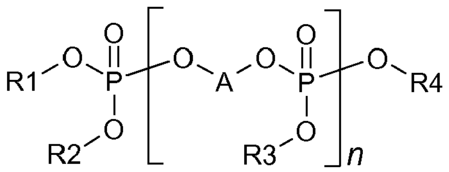

(I),

$R^1$, $R^2$, $R^3$ und $R^4$ unabhängig voneinander jeweils für einen geradkettigen oder verzweigten $C_1$- bis $C_8$-Alkylrest oder für einen geradkettigen oder verzweigten $C_1$- bis $C_4$-Alkoxyethylrest stehen,
A für einen geradkettigen, verzweigten und/oder cyclischen $C_4$- bis $C_{20}$-Alkylenrest steht, oder
A für einen Rest der Formel $-CH_2-CH=CH-CH_2-$, einen Rest der Formel $-CH_2-C\equiv C-CH_2-$, einen Rest der Formel $-CHR^5-CHR^6-(O-CHR^7-CHR^8)_a-$, einen Rest der Formel $-CHR^5-CHR^6-S(O)_b-CHR^7-CHR^8-$ oder für einen Rest der Formel$-(CHR^5-CHR^6-O)_c-R^9-(O-CHR^7-CHR^8)_d-$ steht,
worin
a für eine ganze Zahl von 1 bis 5 steht,
b für eine ganze Zahl von 0 bis 2 steht,
c und d unabhängig voneinander für eine ganze Zahl von 1 bis 5 stehen,
$R^5$, $R^6$, $R^7$ und $R^8$ unabhängig voneinander für H oder Methyl stehen,
$R^9$ für einen Rest der Formel $-CH_2-CH=CH-CH_2-$, einen Rest der Formel $-CH_2-C\equiv C-CH_2-$, einen 1,2-Phenylenrest, einen 1,3-Phenylenrest, einen 1,4-Phenylenrest, oder für einen Rest der Formel (II)

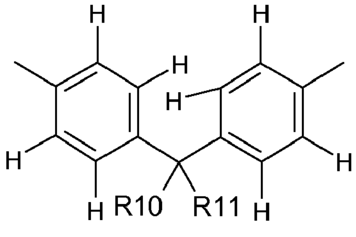

(II),

ein Rest der Formel (III)

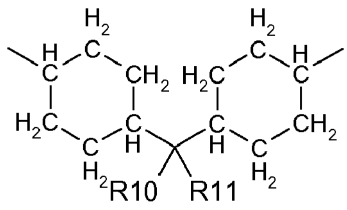

(III),

ein Rest der Formel (IV)

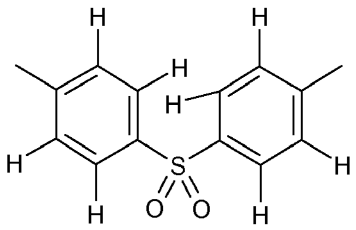

(IV),

oder ein Rest der Formel -C(=O)-$R^{12}$-C(=O)-, steht,
wobei
$R^{10}$ und $R^{11}$ unabhängig voneinander jeweils für H oder $C_1$- bis $C_4$-Alkyl stehen oder $R^{10}$ und $R^{11}$ zusammen für einen gegebenenfalls alkylsubstituierten Ring mit 4 bis 8 C-Atomen stehen,
$R^{12}$ für einen geradkettigen, verzweigten und/oder cyclischen $C_2$- bis $C_8$-Alkylenrest, einen 1,2-Phenylenrest, einen 1,3-Phenylenrest, oder einen 1,4-Phenylenrest stehen, und
*n* für eine ganze Zahl von 0 bis 100 steht,
mit der Maßgabe, dass sich die mindestens drei Poly(alkylenphosphate) der Formel (I) mindestens in der Anzahl *n* der Repetiereinheiten voneinander unterscheiden, und
der Mittelwert der Anzahl der Repetiereinheiten $\overline{n}$ der mindestens drei Poly(alkylenphosphate) der Formel (I) größer als 1,10 und kleiner als 2,00 ist.
und
ii) mindestens einen Phosphorsäureester b), dessen Löslichkeit in Wasser bei 25 °C weniger als 3,0 g/l beträgt, enthält.

**2.** Phosphorsäureester-Zubereitungen gemäß Anspruch 1, **dadurch gekennzeichnet, dass** die Oligomerenmischung a) mindestens drei Poly(alkylenphosphate) der Formel (I), worin
$R^1$, $R^2$, $R^3$ und $R^4$ unabhängig voneinander jeweils für einen geradkettigen oder verzweigten $C_1$- bis $C_4$-Alkylrest oder für einen $C_1$- oder $C_2$-Alkoxyethylrest stehen, A für einen geradkettigen oder verzweigten $C_4$- bis $C_{10}$-Alkylenrest steht, oder
A für einen Rest der Formel $-CH_2-CH=CH-CH_2-$, einen Rest der Formel $-CH_2-C\equiv C-CH_2-$, einen Rest der Formel $-CHR^5-CHR^6-(O-CHR^7-CHR^8)_a-$, einen Rest der Formel $-CHR^5-CHR^6-S(O)_b-CHR^7-CHR^8-$, oder für einen Rest der Formel - $(CHR^5-CHR^6-O)_c-R^9-(O-CHR^7-CHR^8)_d-$ steht,
worin
a für eine ganze Zahl von 1 bis 5 steht,
b für eine ganze Zahl von 0 bis 2 steht,
c und d unabhängig voneinander für eine ganze Zahl von 1 bis 5 stehen,
$R^5$, $R^6$, $R^7$ und $R^8$ unabhängig voneinander für H oder Methyl stehen,
$R^9$ für einen Rest der Formel $-CH_2-CH=CH-CH_2-$, einen Rest der Formel $-CH_2-C\equiv C-CH_2-$, einen 1,2-Phenylenrest, einen 1,3-Phenylenrest, einen 1,4-Phenylenrest, oder für einen Rest der Formel (II)

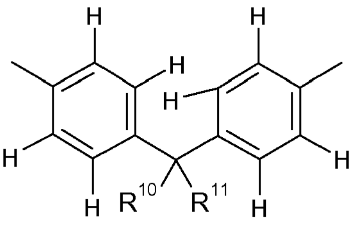

(II),

einen Rest der Formel (III)

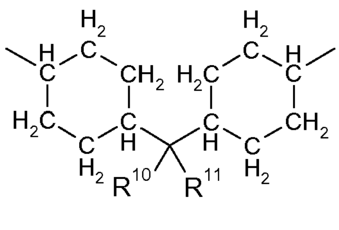

(III),

einen Rest der Formel (IV)

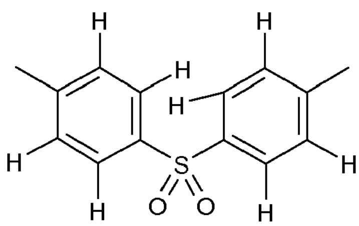

(IV),

oder einen Rest der Formel -C(=O)-$R^{12}$-C(=O)- steht,
wobei
$R^{10}$ und $R^{11}$ unabhängig voneinander jeweils für H oder $C_1$- oder $C_2$-Alkyl stehen,
$R^{12}$ für einen geradkettigen oder verzweigten $C_2$- bis $C_6$-Alkylenrest, einen 1,2-Phenylenrest, einen 1,3-Phenylenrest, oder einen 1,4-Phenylenrest stehen, und
n für eine ganze Zahl von 0 bis 100 steht,
enthält.

3. Phosphorsäureester-Zubereitungen gemäß Ansprüchen 1 und 2, **dadurch gekennzeichnet, dass** die Oligomerenmischung a) mindestens drei Poly(alkylenphosphate) der Formel (I)
worin
$R^1$, $R^2$, $R^3$ und $R^4$ unabhängig voneinander jeweils für einen geradkettigen oder verzweigten $C_1$- bis $C_4$-Alkylrest oder für einen n-Butoxyethylrest stehen,
A für einen geradkettigen $C_4$- bis $C_6$-Alkylenrest steht, oder
A für einen Rest der Formel $-CH_2-CH=CH-CH_2-$, einen Rest der Formel $-CH_2-C{\equiv}C-CH_2-$, einen Rest der Formel $-CHR^5-CHR^6-(O-CHR^7-CHR^8)_a-$, einen Rest der Formel $-CHR^5-CHR^6-S(O)_b-CHR^7-CHR^8-$, oder für einen Rest der Formel$-(CHR^5-CHR^6-O)_c-R^9-(O-CHR^7-CHR^8)_d-$ steht,
worin
a für eine ganze Zahl von 1 bis 5 steht,
b für eine ganze Zahl von 0 bis 2 steht,
c und d unabhängig voneinander für eine ganze Zahl von 1 bis 5 stehen, $R^5$, $R^6$, $R^7$ und $R^8$ unabhängig voneinander für H oder Methyl stehen,
$R^9$ für einen Rest der Formel $-CH_2-CH=CH-CH_2-$, einen Rest der Formel $-CH_2-C{\equiv}C-CH_2-$, einen 1,2-Phenylenrest, einen 1,3-Phenylenrest, einen 1,4-Phenylenrest, oder für einen Rest der Formel (II)

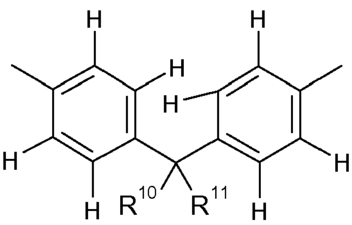

(II),

einen Rest der Formel (III)

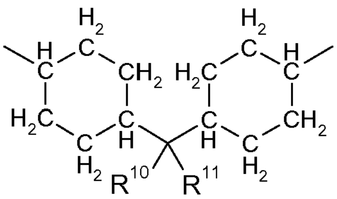

(III),

einen Rest der Formel (IV)

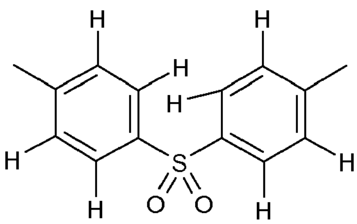

(IV),

oder einen Rest der Formel -C(=O)-$R^{12}$-C(=O)- steht,
wobei
$R^{10}$ und $R^{11}$ unabhängig voneinander jeweils für H oder $C_1$- oder $C_2$-Alkyl stehen, $R^{12}$ für einen geradkettigen oder verzweigten $C_2$- bis $C_6$-Alkylenrest, einen 1,2-Phenylenrest, einen 1,3-Phenylenrest, oder einen 1,4-Phenylenrest stehen, und n für eine ganze Zahl von 0 bis 100 steht,
enthält.

**4.** Phosphorsäureester-Zubereitungen gemäß wenigstens einem der Ansprüche 1 bis 3, **dadurch gekennzeichnet, dass** die Oligomerenmischung a) mindestens drei Poly(alkylenphosphate) der Formel (I)
worin
$R^1$, $R^2$, $R^3$ und $R^4$ gleich sind und für Ethyl, n-Propyl, iso-Propyl, n-Butyl, iso-Butyl oder n-Butoxyethyl stehen,
A für einen geradkettigen $C_4$- bis $C_6$-Alkylenrest steht, oder
A für einen Rest der Formeln

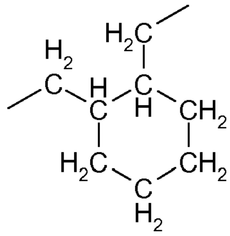

(V)

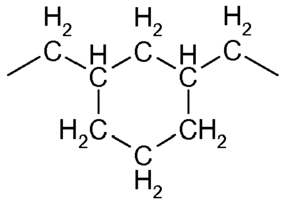

(VI)

oder

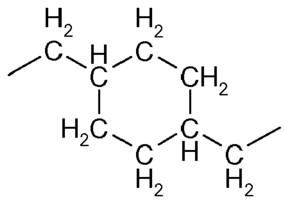

(VII)

steht, oder
A für einen Rest $-CHR^5-CHR^6-(O-CHR^7-CHR^8)_a-$ steht, worin a eine ganze Zahl von 1 bis 2 ist und $R^5$, $R^6$, $R^7$ und $R^8$ gleich sind und für H stehen, oder für einen Rest-$(CHR^5-CHR^6-O)_c-R^9-(O-CHR^7-CHR^8)_d-$, worin c und d unabhängig voneinander für eine ganze Zahl von 1 bis 2 stehen, $R^5$, $R^6$, $R^7$ und $R^8$ gleich sind und für H stehen, $R^9$ für einen Rest der Formel (II) steht, wobei $R^{10}$ und $R^{11}$ gleich sind und für Methyl stehen,
und
n für eine ganze Zahl von 0 bis 20 steht,
enthält.

**5.** Phosphorsäureester-Zubereitungen gemäß wenigstens einem der Ansprüche 1 bis 4,
**dadurch gekennzeichnet, dass** die Phosphorsäureester b) der Formel (VIII)

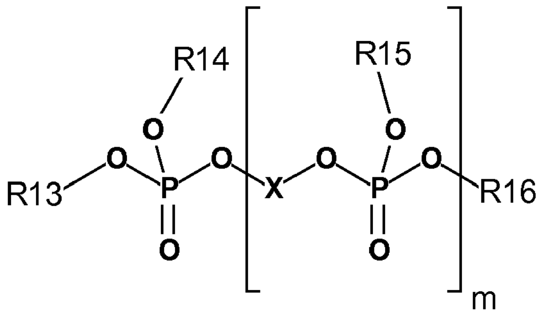

(VIII)

entsprechen, worin
$R^{13}$, $R^{14}$, $R^{15}$ und $R^{16}$ unabhängig voneinander jeweils für geradkettiges oder verzweigtes $C_4$- bis $C_{12}$-Alkyl, $C_4$- bis $C_{12}$-Alkoxyalkyl, $C_3$- bis $C_{12}$-Chloralkyl, $C_3$- bis $C_{12}$-Dichloralkyl oder für gegebenenfalls ein- oder mehrfach durch $C_1$- bis $C_4$-Alkyl substituiertes $C_6$- bis $C_{10}$-Aryl stehen,
X für einen $C_4$- bis $C_8$-Alkylenrest, einen 1,2-Phenylenrest, einen 1,3-Phenylenrest, einen 1,4-Phenylenrest oder einen Rest der Formel (II) steht,

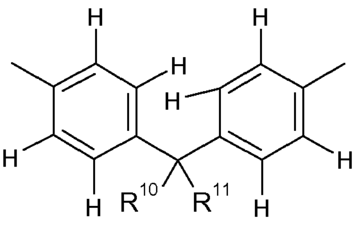

(II)

worin $R^{10}$ und $R^{11}$ die in Anspruch 1 angegebene Bedeutung haben, und
m für 0 oder 1 steht.

**6.** Phosphorsäureester-Zubereitungen gemäß wenigstens einem der Ansprüche 1 bis 5, **dadurch gekennzeichnet, dass** die Phosphorsäureester b) ausgewählt werden aus der Reihe Triphenylphosphat, Diphenylkresylphosphat, Trikresylphosphat, isopropylierten oder butylierten Arylphosphaten, Bisphenol-A-bis(diphenylphosphat), Resorcin-bis(diphenylphosphat), Hydrochinon-bis(diphenylphosphat), Neopentylglycol-bis(diphenylphosphat), Triisobutylphosphat, Tributoxyethylphosphat, Tris(chlorisopropyl)-phosphat und Tris(dichloropropyl)phosphat.

7. Phosphorsäureester-Zubereitung gemäß wenigstens einem der Ansprüche 1 bis 6, **dadurch gekennzeichnet, dass** es sich um Flüssigkeiten mit einer dynamischen Viskosität von 20 bis 5000 mPas bei 23 °C handelt.

8. Phosphorsäureester-Zubereitung gemäß wenigstens einem der Ansprüche 1 bis 7, **dadurch gekennzeichnet, dass** sie 30 bis 70 Gew.-%, vorzugsweise 40 bis 60 Gew.-% der Oligomerenmischung a) und 30 bis 70 Gew.-%, vorzugsweise 40 bis 60 Gew.-% an mindestens einem Phosphorsäureester b), bezogen auf die gesamte Zubereitung, enthält.

9. Phosphorsäureester-Zubereitung nach mindestens einem der Ansprüche 1 bis 8, **dadurch gekennzeichnet, dass** sie ein oder mehrere Hilfsmittel ausgewählt aus der Gruppe der Lösungsmitteln, Antioxidantien, Stabilisatoren und Farbstoffen enthält.

10. Verfahren zur Herstellung einer Phosphorsäure-Zubereitung gemäß Anspruch 1, **dadurch gekennzeichnet, dass** eine Oligomeremischung a) gemäß Anspruch 1 und mindestens ein Phosphorsäureester b) gemäß Anspruch 1 miteinander vermischt werden gegebenenfalls in Gegenwart von einem oder mehreren Hilfsmitteln.

11. Verwendung von Phosphorsäureester-Zubereitungen gemäß wenigstens einem der Ansprüche 1 bis 9 als Flammschutzmittel.

12. Verwendung nach Anspruch 11, **dadurch gekennzeichnet, dass** die Phosphorsäureester-Zubereitungen als Flammschutzmittel für Polyurethane eingesetzt werden.

13. Verwendung nach Anspruch 12, **dadurch gekennzeichnet, dass** es sich bei den Polyurethanen um Schaumstoffe, vorzugsweise um Polyurethanweichschaumstoffe basierend auf Polyether-Polyolen oder Polyester-Polyolen handelt.

14. Flammschutzmittel-Zubereitungen enthaltend mindestens eine Phosporsäureester-Zubereitung gemäß wenigstens einem der Ansprüche 1 bis 9, ein oder mehrere, von der Phosporsäureester-Zubereitung verschiedene Flammschutzmittel und gegebenenfalls ein oder mehrere Hilfsmittel.

15. Polyurethane enthaltend eine Phosphorsäureester-Zubereitungen nach mindestens einem der Ansprüche 1 bis 9 .

16. Polyurethanschaumstoffe, vorzugsweise Polyurethanweichschaumstoffe basierend auf Polyether- oder Polyesterpolyolen enthaltend eine Phosphorsäureester-Zubereitungen nach mindestens einem der Ansprüche 1 bis 9 .

17. Verfahren zur Herstellung von Polyurethanen gemäß Anspruch 15, **dadurch gekennzeichnet, dass** organische Polyisocyanate mit Verbindungen mit mindestens 2 gegenüber Isocyanaten reaktionsfähigen Wasserstoffatomen in Gegenwart von einer Phosphorsäureester-Zusammensetzung gemäß wenigstens einem der Ansprüche 1 bis 9 und in Gegenwart von üblichen Treibmitteln, Stabilisatoren, Aktivatoren und/oder weiteren üblichen Hilfs- und Zusatzstoffen bei 20 bis 80 °C umgesetzt werden.

18. Verfahren gemäß Anspruch 17, **dadurch gekennzeichnet, dass** die Phosporsäureester-Zubereitung in einer Menge von 0,5 bis 30 Gewichtsteilen, vorzugsweise von 3 bis 25 Gewichtsteilen, bezogen auf 100 Gewichtsteile Polyolkomponente, eingesetzt wird.

19. Verwendung der Polyurethane nach Anspruch 15 in Möbelpolsterungen, Textileinlagen, Matratzen, Fahrzeugsitzen, Armlehnen, Bauelementen, Sitz- und Armaturverkleidungen, Kabelummantelungen, Dichtungen, Beschichtungen, Lacken, Klebstoffen, Haftvermittlern und Fasern.

20. Verwendung einer Phosphorsäureester-Zubereitungen gemäß mindestens einem der Ansprüche 1 bis 9 als Hydraulikflüssigkeit.

21. Verfahren zur Verringerung der Hygroskopie von Poly(alkylenphosphaten), **dadurch gekennzeichnet, dass** man das Poly(alkylenphosphat) mit 40 - 230 Gew.-%, bezogen auf die Masse des Poly(alkylenphosphats), von mindestens einem Phosphorsäureester, dessen Löslichkeit in Wasser bei 25 °C weniger als 3,0 g/l beträgt, vereinigt und die Mischung homogenisiert.

22. Verfahren nach Anspruch 21, **dadurch gekennzeichnet, dass** es sich bei den Poly-(alkylenphosphaten) um eine

Oligomerenmischung a) gemäß Anspruch 1 handelt.

Europäisches Patentamt
European Patent Office
Office européen des brevets

# EUROPÄISCHER RECHERCHENBERICHT

Nummer der Anmeldung
EP 13 18 4290

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | EP 2 687 534 A1 (LANXESS DEUTSCHLAND GMBH [DE]) 22. Januar 2014 (2014-01-22)<br>* Ansprüche 1,8-19 * | 1-7,9-19 | INV.<br>C08G65/335<br>C08K5/00<br>C07C43/11<br>C10M141/10 |
| A,D | WO 01/18088 A1 (AKZO NOBEL NV [NL]) 15. März 2001 (2001-03-15)<br>* Ansprüche 1,6 * | 1-22 | |
| A | EP 2 154 185 A1 (LANXESS DEUTSCHLAND GMBH [DE]) 17. Februar 2010 (2010-02-17)<br>* Anspruch 1 *<br>* Tabellen 1-3 * | 1-22 | |
| A | US 2005/107500 A1 (WILLIAMS BARBARA A [US] ET AL) 19. Mai 2005 (2005-05-19)<br>* Ansprüche 1,2,4 * | 1-22 | |
| A | US 5 608 100 A (SICKEN MARTIN [DE]) 4. März 1997 (1997-03-04)<br>* Anspruch 1 *<br>* Beispiele 1-15 * | 1-22 | RECHERCHIERTE SACHGEBIETE (IPC) |
| A | WO 01/98401 A1 (AKZO NOBEL NV [NL]; PINZONI EMANUEL [US]) 27. Dezember 2001 (2001-12-27)<br>* Anspruch 1 * | 1-22 | C08G<br>C08K |
| A | EP 1 746 129 A1 (LANXESS DEUTSCHLAND GMBH [DE]) 24. Januar 2007 (2007-01-24)<br>* Ansprüche 1-8 * | 1-22 | |
| A | US 4 056 480 A (HERBER JOHN F) 1. November 1977 (1977-11-01)<br>* Anspruch 1; Tabellen I,II,III * | 1-22 | |

Der vorliegende Recherchenbericht wurde für alle Patentansprüche erstellt

2

| Recherchenort | Abschlußdatum der Recherche | Prüfer |
|---|---|---|
| Den Haag | 4. März 2014 | O'Sullivan, Timothy |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 13 18 4290

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-03-2014

| Im Recherchenbericht angeführtes Patentdokument | Datum der Veröffentlichung | Mitglied(er) der Patentfamilie | Datum der Veröffentlichung |
|---|---|---|---|
| EP 2687534 A1 | 22-01-2014 | CA 2821152 A1 | 20-01-2014 |
| | | CN 103570972 A | 12-02-2014 |
| | | EP 2687534 A1 | 22-01-2014 |
| | | EP 2687535 A1 | 22-01-2014 |
| | | KR 20140011985 A | 29-01-2014 |
| | | US 2014024734 A1 | 23-01-2014 |
| WO 0118088 A1 | 15-03-2001 | AT 247140 T | 15-08-2003 |
| | | CA 2384299 A1 | 15-03-2001 |
| | | DE 60004546 D1 | 18-09-2003 |
| | | DE 60004546 T2 | 17-06-2004 |
| | | EP 1218433 A1 | 03-07-2002 |
| | | ES 2204695 T3 | 01-05-2004 |
| | | JP 4916074 B2 | 11-04-2012 |
| | | JP 2003508608 A | 04-03-2003 |
| | | US 7288577 B1 | 30-10-2007 |
| | | WO 0118088 A1 | 15-03-2001 |
| EP 2154185 A1 | 17-02-2010 | AT 496086 T | 15-02-2011 |
| | | BR PI0904817 A2 | 22-03-2011 |
| | | CA 2674664 A1 | 16-02-2010 |
| | | DE 102008038054 A1 | 18-02-2010 |
| | | EP 2154185 A1 | 17-02-2010 |
| | | ES 2358173 T3 | 06-05-2011 |
| | | JP 2010043262 A | 25-02-2010 |
| | | US 2010041780 A1 | 18-02-2010 |
| US 2005107500 A1 | 19-05-2005 | AT 391149 T | 15-04-2008 |
| | | CA 2428540 A1 | 10-10-2002 |
| | | CN 1474852 A | 11-02-2004 |
| | | DE 60133482 T2 | 20-05-2009 |
| | | EP 1334149 A1 | 13-08-2003 |
| | | JP 2004519547 A | 02-07-2004 |
| | | KR 20030063377 A | 28-07-2003 |
| | | US 2005107500 A1 | 19-05-2005 |
| | | WO 02079315 A1 | 10-10-2002 |
| US 5608100 A | 04-03-1997 | KEINE | |
| WO 0198401 A1 | 27-12-2001 | AU 7006401 A | 02-01-2002 |
| | | CA 2414004 A1 | 27-12-2001 |
| | | CN 1437631 A | 20-08-2003 |
| | | EP 1297062 A1 | 02-04-2003 |
| | | JP 2004501255 A | 15-01-2004 |
| | | WO 0198401 A1 | 27-12-2001 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR. EP 13 18 4290

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-03-2014

| Im Recherchenbericht angeführtes Patentdokument | Datum der Veröffentlichung | Mitglied(er) der Patentfamilie | Datum der Veröffentlichung |
|---|---|---|---|
| EP 1746129 A1 | 24-01-2007 | AT 420917 T | 15-01-2009 |
| | | DE 102005034269 A1 | 25-01-2007 |
| | | EP 1746129 A1 | 24-01-2007 |
| | | ES 2318625 T3 | 01-05-2009 |
| | | US 2007021516 A1 | 25-01-2007 |
| US 4056480 A | 01-11-1977 | AU 507315 B2 | 14-02-1980 |
| | | AU 1474876 A | 15-12-1977 |
| | | DE 2625878 A1 | 23-12-1976 |
| | | FR 2314243 A1 | 07-01-1977 |
| | | GB 1532904 A | 22-11-1978 |
| | | JP S51149884 A | 23-12-1976 |
| | | NL 7606145 A | 14-12-1976 |
| | | US 4056480 A | 01-11-1977 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2632767 A
- US 4056480 A
- US 2782128 A
- EP 1746129 B1
- EP 12177287 A
- WO 2001018088 A1
- DE OS1694142 A
- DE OS1694215 A
- DE OS1720768 A
- DE OS2832253 A
- DE OS2732292 A
- US 2764565 A
- GB PS1162517 A
- DE OS2153086 A


### In der Beschreibung aufgeführte Nicht-Patentliteratur


- Kunststoff-Handbuch Band VII, Polyurethane. Carl-Hanser-Verlag, 1993, vol. VII
- Polyurethanes. **NORBERT ADAM ; GEZA AVAR ; HERBERT BLANKENHEIM ; WOLFGANG FRIEDERICHS ; MANFRED GIERSIG ; ECKEHARD WEIGAND ; MICHAEL HALFMANN ; FRIEDRICH-WILHELM WITTBECKER ; DONALD-RICHARD LARIMER ; UDO MAIER.** Ullmann’s Encyclopedia of Industrial Chemistry Release 2005, Electronic Release. Wiley-VCH, 2005
- **B. W. SIEFKEN.** *Justus Liebigs Annalen der Chemie,* vol. 562, 75-136
- Zusatzmittel sind im Kunststoff-Handbuch. 1993, vol. VII, 104, , 123
- Kunststoff-Handbuch Band VII, Polyurethane. Carl-Hanser-Verlag, München, 1993, 139-192